# EUROPEAN PATENT SPECIFICATION

(11) **EP 0 535 954 B1**
(45) Date of publication and mention of the grant of the patent: **15.04.1998**
(21) Application number: 92308966.8
(22) Date of filing: 01.10.1992
(51) Int. Cl.: G09G 3/36

(54) **Liquid crystal display device**
Flüssigkristallanzeigegerät
Dispositif d'affichage à cristaux liquides

(30) Priority: 04.10.1991 JP 257687/91; 07.10.1991 JP 259147/91
(43) Date of publication of application: 07.04.1993
(73) Proprietor: KABUSHIKI KAISHA TOSHIBA, Kawasaki-shi, Kanagawa-ken 210 (JP)
(72) Inventor: Tomita, Satoru c/o Intellectual Property Division, Minato-ku, Tokyo (JP)
(74) Representative: Luckhurst, Anthony Henry William

(56) References cited:
- EP-A- 0 336 570
- EP-A- 0 373 565

## Description

The present invention relates to a liquid crystal display device and particularly to an active matrix type liquid crystal display device using a thin film transistor (TFT) as a switching element.

Recently, liquid crystal display devices have been widely used as a display element for, e.g., a television and graphic display because of the thin size and low consumed electric power thereof.

Among them, an active matrix type liquid crystal display device using a thin film transistor (hereinafter referred to as TFT) as a switching element is suitable for the large number of pixels. The active matrix type liquid crystal display device is expected to realize a high picture quality, large size and color image of a display screen. Thus, various investigations and developments therefor have been conducted and some have already practically been used.

A main part of a display element in the active matrix type liquid crystal display device is generally constructed of a switching active element such as a TFT; a pixel electrode connected with the active element; an active element array substrate arranged with the pixel electrode; a counter substrate formed with a counter electrode thereon arranged opposite to the allay substrate; a liquid crystal composition held between these substrates; and polarizing plates adhered to the outer surfaces of these substrates.

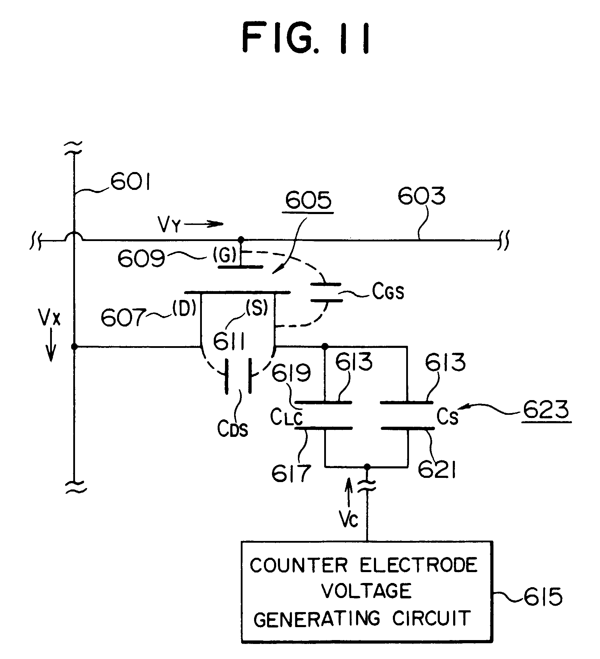

Fig. 11 is a view illustrating a equivalent circuit of one pixel part of a conventional active matrix type liquid crystal display device.

An n type TFT switching element 605 is disposed in an intersection of a signal line 601 and scanning line 603. A drain electrode (D) 607 thereof is connected to the signal line 601, a gate electrode (G) 609 being connected to the scanning line 603, a source electrode (S) 611 being connected to a pixel electrode 613.

A liquid crystal composition 619 is held between the pixel electrode 613 and a counter electrode 617, which is connected to a counter electrode voltage generating circuit 615. In similar manner to the counter electrode 617, a storage capacitor (Cs) 623 is formed between a storage capacitor line 621, which is connected to the counter electrode voltage generating circuit 615, and the pixel electrode 613.

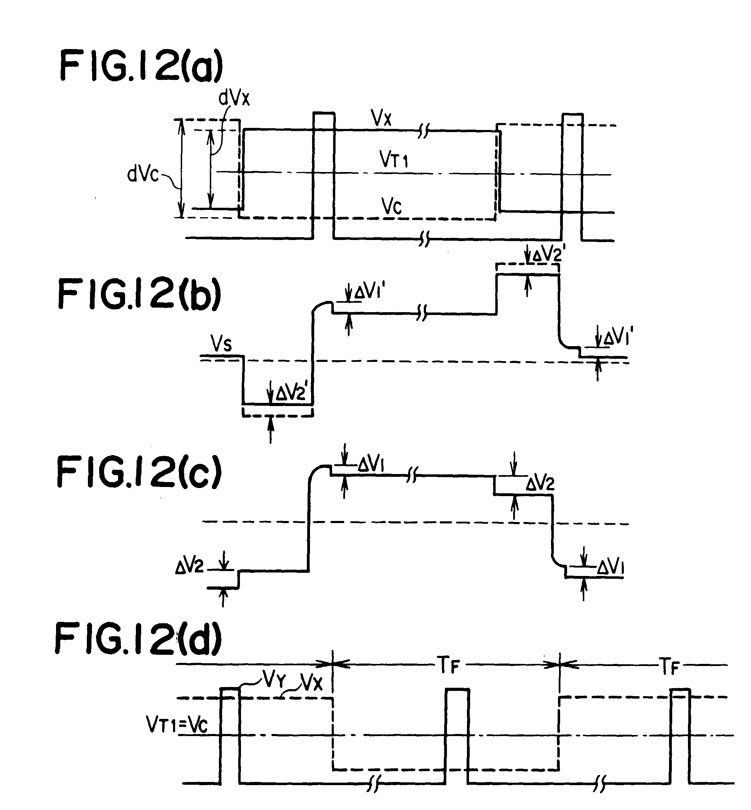

The counter electrode 617 is applied with a counter electrode voltage (Vc), whose polarity is inverted against a standard potential (VT1) synchronized with an image signal voltage (VX). Such polarity inversion of the counter electrode voltage (Vc) reduces the amplitude of image signal voltage (VX), compared with the case of using a direct current voltage as a counter electrode voltage (Vc). However, as shown in Fig. 12 (d), the counter electrode voltage (Vc) may be a direct current voltage.

Fig. 12 is a view illustrating each driving waveform of one pixel in the conventional active matrix liquid crystal display device shown in Fig. 11. Referring to Fig. 12, an operation of the conventional active matrix liquid crystal display device will now be described.

As shown in Fig. 12 (a), a scanning pulse (VY) is applied to the gate electrode (G) 609 of the TFT switching element 605 via the scanning line 603. The image signal voltage (VX), whose polarity is inverted against the standard potential (VT1) every one frame period to prevent degradation of the liquid crystal composition 619, is applied tothesignal line 601.

While the scanning pulse (VY) is applied to the gate electrode (G) 609 of the TFT switching element 605, the image signal voltage (VX) is written to the pixel electrode 613 and the pixel electrode 613 holds a pixel electrode potential (Vs) as shown in Fig. 12 (b).

Thus, for one frame period (TF), an electric potential difference between the pixel electrode potential (Vs) and counter electrode potential (Vc) is held in a liquid crystal capacitor (CLC), which has the liquid crystal composition 619 as a main part. As a result, the liquid crystal composition 619 is excited to execute display. In the other hand, an electric potential difference between the pixel electrode potential (Vs) and storage capacitor line potential, which is set up at the same potential as the counter electrode potential (Vc), is held in the storage capacitor (Cs) 623. As a result, time change of electric potential difference held in the liquid crystal capacitor (CLC), is compensated to keep the display for one frame period (TF).

However, as shown in Fig. 11, there is a parasitic capacitance (CGS) between the gate electrode (G) 609 and the source electrode (S) 611 of the TFT switching element 605. This parasitic storage (CGS) of the TFT switching element 605 causes a level shift (ΔV1') shown in Fig. 12 (b) in the pixel electrode potential (Vs) at the startup of the scanning pulse (VY).

As shown in Fig. 11, there are a parasitic capacitance (CDS) between the drain electrode (D) 607 and the source electrode (S) 611 of the TFT switching element 605 and parasitic capacitance (CGS). These parasitic capacitances (CDS), (CGS) cause a level shift (ΔV2') shown in Fig. 12 (b) in the pixel electrode potential (Vs) at the polarity conversion of the image signal potential (VY) and/or counter electrode potential.

As a result, in the conventional liquid crystal display device, as shown in Fig. 12 (c), the level shifts (ΔV1), (ΔV2) occur in the liquid crystal applying voltage due to the parasitic capacities (CGS), (CDS). For these reasons, a voltage applied to the liquid crystal composition 619 is changed so that flickers or nonuniformity of brightness in a display image take place.

It has previously been impossible to eliminate these parasitic capacitances (CGS).

As described above, the conventional liquid crystal display device has the problem that level shifts (ΔV1), (ΔV2), which are caused by the parasitic capacitances (CGS), (CDS) of the TFT switching element 605, result in occurrence of flickers or nonuniformity of brightness in a display image.

European patent specification number EP-0 336 570-A1 describes a method for driving an active matrix type liquid crystal display device. A first modulation signal is applied to a first wire connected to the picture element electrodes through capacity, and a second modulation signal is applied to the counter electrodes. By modulating the potential difference between the first wire and the counter electrodes, the capacity coupling potential appearing at the picture element electrode through the related capacity can be effectively utilised. As a result, at least part of the DC components induced through the capacity between the gate and drain by the scanning signal and the dielectric anisotropy of the liquid crystal can be compensated, so that decrease of driving electric power, improvement of display picture quality, and enhancement of driving reliability may be achieved.

European patent specification number EP-0 373 565-A1 describes a similar method of driving an active matrix type liquid crystal display device, in which an image signal voltage is transmitted to the pixel electrode during an on-period of the switching element, and a modulating signal is applied to a first line during an off-period of the switching element. The modulating signal consists of a voltage which reverses alternately for each field, thereby changing the potential of the pixel electrode. This changed potential is superposed upon, and is effectively cancelled from the image signal voltage, the resultant voltage being applied across the display material The method described in EP-0 373 565-A2 is intended to improve display quality and drive reliability, and reduce the drive power of the display unit.

However, in the methods described above, undesirable potential changes or level shifts occur in the potential waveform of the picture element at the time when the polarity of the image signal voltage is changed, and when a scanning pulse is applied. These level shifts, caused by parasitic capacitances of the switching element, result in the occurrence of flickers or non-uniformity of brightness in a display image.

An object of the invention is to provide a liquid crystal display device with a stable high quality image display, without flickers or nonuniformity of brightness in a display image, which are caused by the level shifts (ΔV1)(ΔV2) of the liquid crystal applying voltage due to the parasitic capacitances (CGS), (CDS) of the TFT switching element.

The first aspect of this invention is a liquid crystal display device comprising:
matrix wiring having a plurality of scanning lines and a plurality of signal lines disposed to intersect with the plurality of scanning lines, wherein a scanning pulse is applied to the scanning lines, and an image signal voltage having a polarity periodically inverted with respect to a first standard potential is applied to the signal lines; a pixel electrode disposed at each intersection of the plurality of scanning lines and the plurality of signal lines; a transistor switching element included at each intersection of the plurality of scanning lines and the plurality of signal lines and connected to each pixel electrode; a storage capacitor formed between the pixel electrode and a storage capacitor line; a counter electrode disposed opposite to the pixel electrode; a liquid crystal composition held between the pixel electrode and the counter electrode; and means for supplying a storage capacitor line voltage to the storage capacitor line, characterised in that the storage capacitor line voltage, the polarity of which is inverted with respect to a second standard potential while substantially synchronised with the polarity inversion of the image signal voltage, is applied to the storage capacitor line so as to compensate for a first change of a liquid crystal applying voltage substantially synchronised with the polarity inversion of the image signal voltage.

The second aspect of this invention is a liquid crystal display device comprising: matrix wiring having a plurality of scanning lines and a plurality of signal lines disposed to intersect with the plurality of scanning lines, wherein a scanning pulse is applied to the scanning lines, and an image signal voltage, having a polarity periodically inverted with respect to a first standard potential, is applied to the signal lines, a pixel electrode disposed at each intersection of the plurality of scanning liens and the plurality of signal lines; a transistor switching element included at each intersection of the plurality of scanning lines and the plurality of signal lines and connected to each pixel electrode; a counter electrode disposed opposite to the pixel electrode; a liquid crystal composition held between the pixel electrode and the counter electrode; a storage capacitor formed between the pixel electrode and a storage capacitor line, and storage capacitor line driving means for supplying a storage capacitor line voltage to the storage capacitor line, characterised in that a potential level of the storage capacitor line voltage is changed substantially synchronised with the scanning pulse, and a direction of the potential level change of the storage capacitor line voltage is opposite to a direction of a potential level change of the scanning pulse, so as to compensate for a change of a liquid crystal applying voltage substantially synchronised with the scanning pulse.

There are the parasitic capacitances (CDS), (CGS) of the TFT switching element in an active matrix type liquid crystal display device. When the polarity of the image signal voltage (VX) and/or counter electrode voltage (Vc) is inverted against the standard potential, the potential at the drain electrode (D) side of the parasitic capacitance (CDS) is largely changed. As a result, electric charge is re-distributed between the liquid crystal capacitor (CLC), storage capacitor (Cs), and parasitic capacities (CGS), (CDS). In the conventional liquid crystal device, this change causes the level shift (ΔV2) in the liquid crystal applying voltage.

According to the invention, a storage capacitor line is positively driven to cause such a level shift (ΔV2) to disappear.

Namely, in the liquid crystal display device according to the invention, the storage capacitor line voltage (VH), whose polarity is inverted against the second standard potential synchronized with the image signal voltage (VX) to be compensating change of the liquid crystal applying voltage, is applied to the storage capacitor line. As a result, the level shift (ΔV2) of the liquid crystal applying voltage caused by re-distribution of the electric charge can be reduced, and further can be disappeared.

Further, in this case, preferably, if the amplitude (dVH) of the storage capacitor line voltage (VH) is controlled to be in the range of |-CDS•dVX/Cs|/5 or more but |-CDS•dVX/Cs|x10 or less, specially |-CDS•dVX/Cs|, the level shift (ΔV2) is effectively compensated without shortage or excess to prevent flickers or nonuniformity of brightness in a display image, thereby obtaining a stable image display with a high quality.

In a liquid crystal display device where the polarity of the voltage (Vc) to be applied to the counter electrode is inverted against the second standard potential, the storage capacitor line voltage (VH), whose polarity is inverted against the third standard potential synchronized with the polarity conversion of the image signal voltage (VX) against the first standard potential to be the same as that of the counter electrode voltage (Vc), is applied to the storage capacitor line. As a result, the level shift (ΔV2) of the liquid crystal applying voltage caused by re-distribution of the electric charge can be suppressed. This reduces change applied to the voltage of the liquid crystal, and further can let the change to disappear.

Further, in this case, preferably, if the amplitude (dVH) of the storage capacitor line voltage (VH) is controlled to be in the range of |[(CGS+CDS+Cs)•dVc-CDS•dVX]/Cs|/5 or more but |[(CGS+CDS+Cs)•dVc-CDS•dVX]/Cs|x10 or less, specially |[(CGS+CDS+Cs)•dVc-CDS•dVX]/Cs|, the level shift (ΔV2) is most effectively compensated to prevent flickers or nonuniformity of brightness in a display image, thereby obtaining a stable image display with a high quality.

With respect to the level shift (ΔV1), the storage capacitor line voltage (VH), which is changed in direction opposite to the scanning pulse (VY) substantially synchronized with a scanning pulse (VY) by an amount of a voltage change dVH1, is applied to the storage capacitor line synchronized with a timing of applying the scanning pulse (VY). The storage capacitor line corresponds to the pixel electrode connected to the TFT switching element to be applied with the scanning pulse (VY). As a result, electric potential differences of the liquid crystal capacitor and storage capacitor changed by the parasitic capacitance (CGS) is compensated to suppress the level shift (ΔV1) of the liquid crystal applying voltage. This prevents flickers or nonuniformity of brightness in a display image. If dVH1 is in the range of |-CGS•dVY/Cs|/2 or more but |-CGS•dVY/Cs|x2 or less, specially |-CGS•dVY/Cs|, the level shift (ΔV1) can be most effectively suppressed.

As is apparent from the above equation of the amplitude (dVH) of the storage capacitor line voltage (VH), if the storage capacitor (Cs) is set larger, the amplitude (dVH) becomes smaller. The structure of a circuit, which supplies a storage capacitor line voltage, can be simplified. The storage capacitor (Cs) is set up at a large value in, for example, the following three manners: First, a storage capacitor line is formed of a transparent electrode such as ITO (indium oxide·tin) and an overlap area with a pixel electrode is enlarged without decrease of the aperture ratio, thereby increasing the area of the storage capacitor (Cs) and then the capacity value thereof. Second, a dielectric with a high dielectric constant is used as a material of an insulating film which is inserted between the storage capacitor line and pixel electrode, thereby increasing the capacity value. Third, the insulating film between the storage capacitor line and pixel electrode is formed such that the thickness of the insulating film is thin, thereby increasing the capacity value.

Fig. 1 is a view illustrating the structure of an active matrix type liquid crystal display device according to a first embodiment of the present invention.

Fig. 2 is a view illustrating the structure of an active matrix type liquid crystal display device according to the first embodiment of the present invention.

Fig. 3 is a view illustrating an equivalent circuit showing the structure of an active matrix type liquid crystal display device according to the present invention.

Fig. 4 is a view illustrating driving waveforms of an active matrix type liquid crystal display device according to the present invention.

Fig. 5 is a view illustrating the structure of a storage capacitor line voltage generating circuit of an active matrix type liquid crystal display device according to the first embodiment of the present invention.

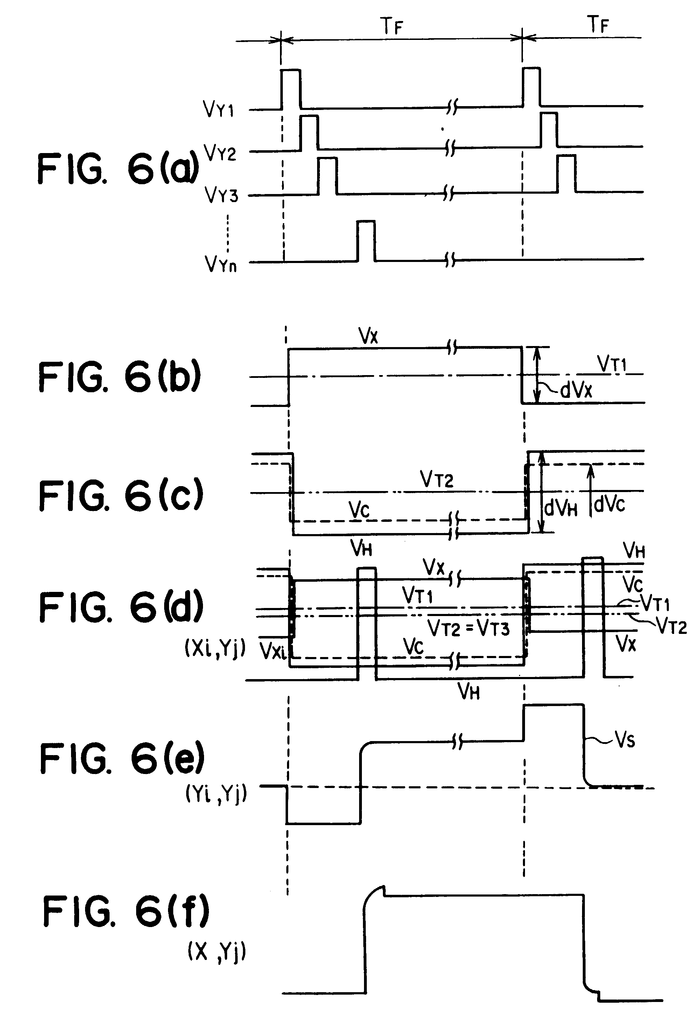

Fig. 6 is a view illustrating driving waveforms of an active matrix type liquid crystal display device according to a second embodiment of the present invention.

Fig. 7 is a view illustrating the structure of a storage capacitor line voltage generating circuit of an active matrix type liquid crystal display device according to the second embodiment of the present invention.

Fig. 8 is a view illustrating driving waveforms of an active matrix type liquid crystal display device according to a third embodiment of the present invention.

Fig. 9 is a view illustrating the structure of a storage capacitor line driving circuit of an active matrix type liquid crystal display device according to the third embodiment of the present invention.

Fig. 10 is a view illustrating the structure of an active matrix type liquid crystal display device according to the third embodiment of the present invention.

Fig. 11 is a view illustrating an equivalent circuit showing the structure of a conventional liquid crystal display device.

Fig. 12 is a view illustrating driving waveforms of a conventional liquid crystal display device.

Referring to the accompanying drawings, one embodiment of this invention will now be described in detail.

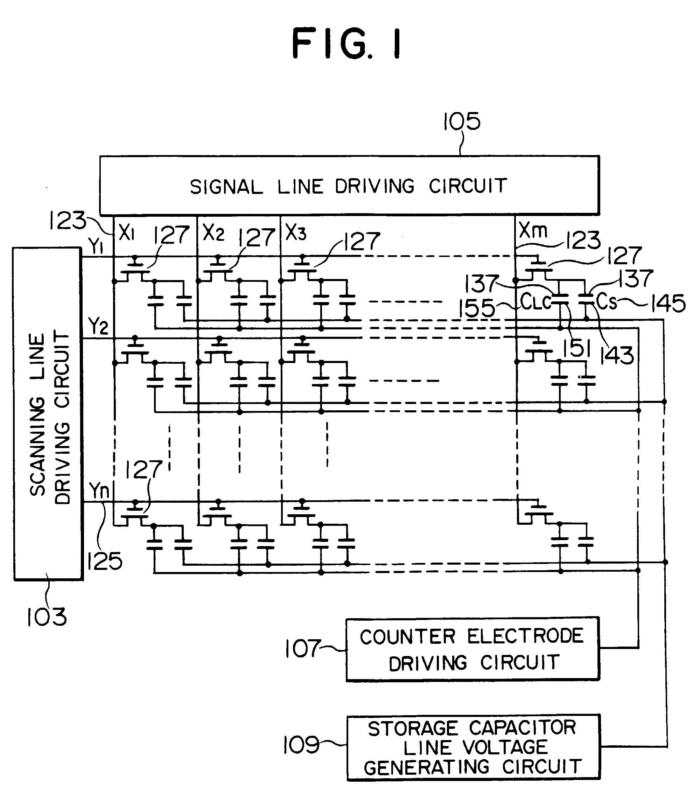

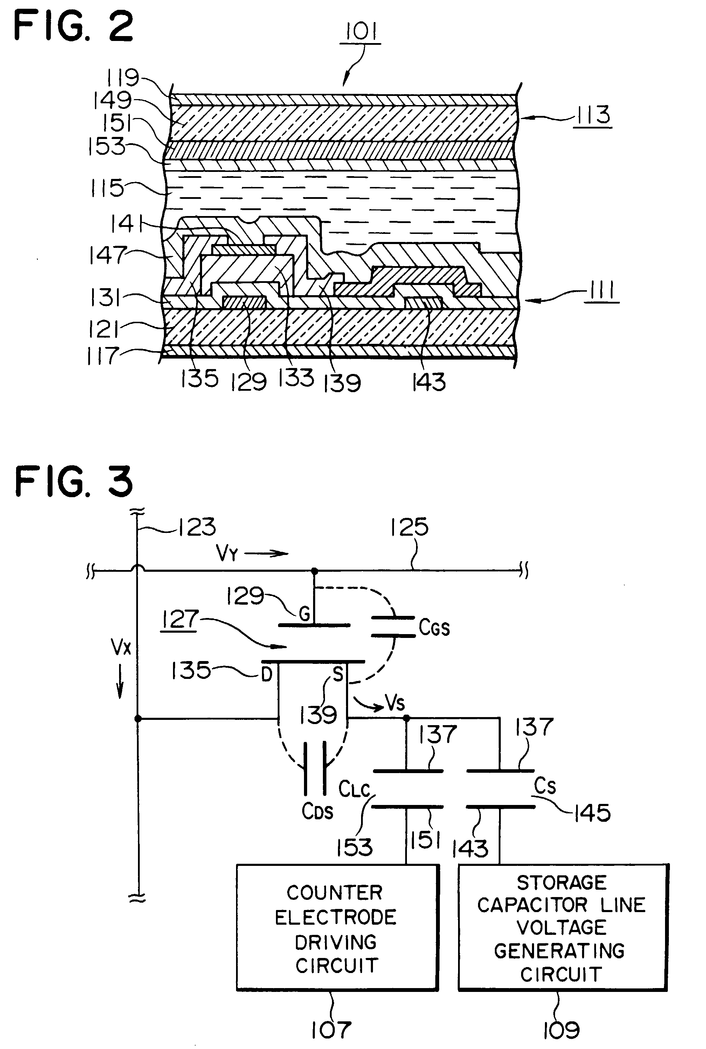

Fig. 1 is a schematic view illustrating the structure of an active matrix type liquid crystal display device according to this invention. Fig. 2 is a sectional view of a liquid crystal display element used therefor.

The main part of the active matrix type liquid crystal display device is constructed of a liquid crystal display element 101, a scanning line driving circuit 103, a signal line driving circuit 105, a counter electrode driving circuit 107, and a storage capacitor line voltage generating circuit 109.

The liquid crystal display element 101 holds a liquid crystal composition 115 between an active element substrate 111 and a counter substrate 113. Polarizing plates 117, 119 are arranged on the active element substrate 111 and counter substrate 113.

In the active element substrate 111, m signal lines 123 and n scanning lines 125 are arranged on a transparent insulating substrate 121 using a glass substrate in a matrix form. In each intersection, there is arranged a TFT element 127 as a switching element. As the transparent insulating substrate 121, a plastic film besides a glass substrate may be used.

In the TFT element 127, an insulating film 131 is placed on a gate electrode 129, which is formed integrately with the scanning line 125, so as to cover the gate electrode 129. An active layer 133, which is formed of n type amorphous silicon (a-Si), is placed thereon. A drain electrode 135, which is formed integrately with the signal line 123, and a source electrode 139, which is connected to a pixel electrode 137 formed of ITO are connected to the active layer 133, via an ohmic contact layer (not shown). The TFT element 127 is constructed such that a channel protect film 141 as an etching stopper is placed on the active layer 133 to prevent the active layer 133 from damage during a production process.

Further, a storage capacitor line 143, which is formed of a Mo-Ta alloy and produced in the same step of the scanning line 125, is placed on the transparent insulating substrate 121. In the plane-arrangement, the storage capacitor line 143 is substantially parallel to the scanning line 125. In the layer-arrangement, the storage capacitor line 143 is faced the pixel electrode 137 via the insulating film 131. A storage capacitor (Cs) 145 is formed between the storage capacitor line 143 and pixel electrode 137. The storage capacitor (Cs) 145 uses the insulating layer 131 as a dielectric.

An active element substrate 111 is constructed such that an orientation film 147 covers the upper surface of the active element substrate 111.

The counter substrate 113 is constructed such that a counter electrode 151 and orientation film 153, which are opposite to the pixel electrode 137, are placed on a transparent insulating substrate 149 of a glass substrate. The counter substrate 113 is combined with the active element substrate 111 in parallel therewith in a predetermined space. This counter electrode 151 is connected to the counter electrode driving circuit 107, which generates a direct current voltage (Vc).

The liquid crystal composition 115 is held between the active element substrate 111 and counter substrate 113. The periphery thereof is sealed with a sealing material (not shown). The polarizing plates 117, 119 are placed and adhered to outer surfaces of the active element substrate 111 and counter substrate 113, respectively.

In such a liquid crystal display device 101, the signal line 123 is connected to the signal line driving circuit 105, the scanning line 125 is connected to the scanning driving circuit 103, each storage capacitor line 143 is commonly connected to the storage capacitor line voltage generating circuit 109, and the counter electrode 151 is connected to the counter electrode driving circuit 107.

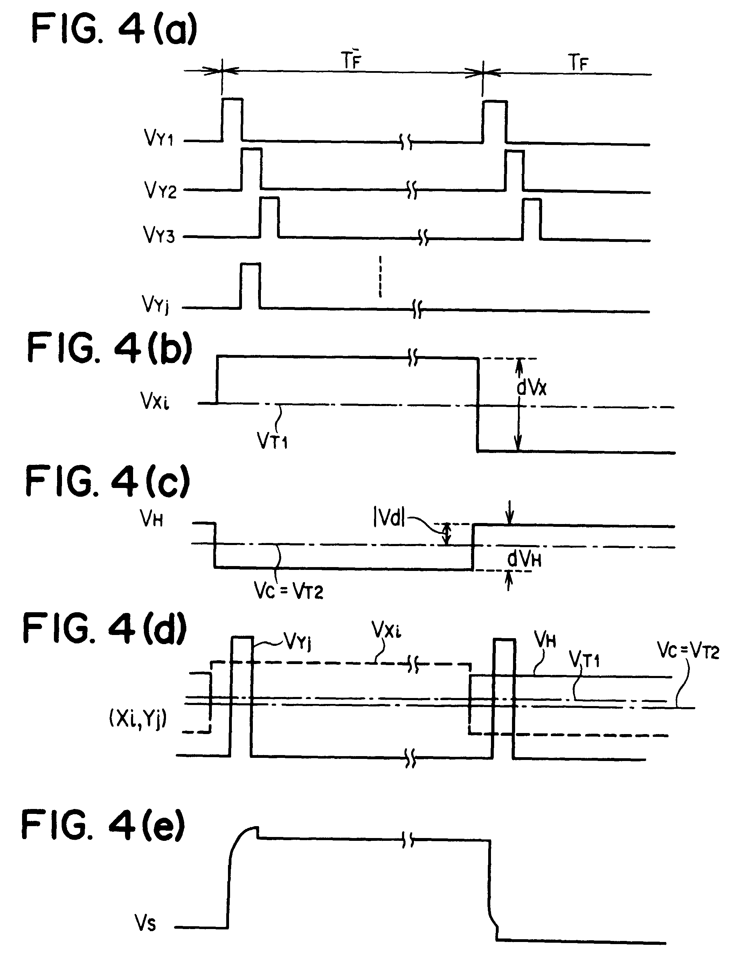

The main part of the signal line driving circuit 105 is constructed of a shift register circuit and a latch circuit. As shown in Fig. 4 (b), the signal line driving circuit 105 generates an image signal voltage (VX), whose polarity is inverted against a first standard potential (VT1) every one frame period (TF), and provides it to the signal line 123.

The main part of the scanning line driving circuit 103 is constructed of a shift register circuit and latch circuit. The scanning line driving circuit 103 generates a scanning pulse (VY), as shown in Fig. 4 (a), which selects each scanning line 125 one line-at-a-time, and provide it to the scanning line 125.

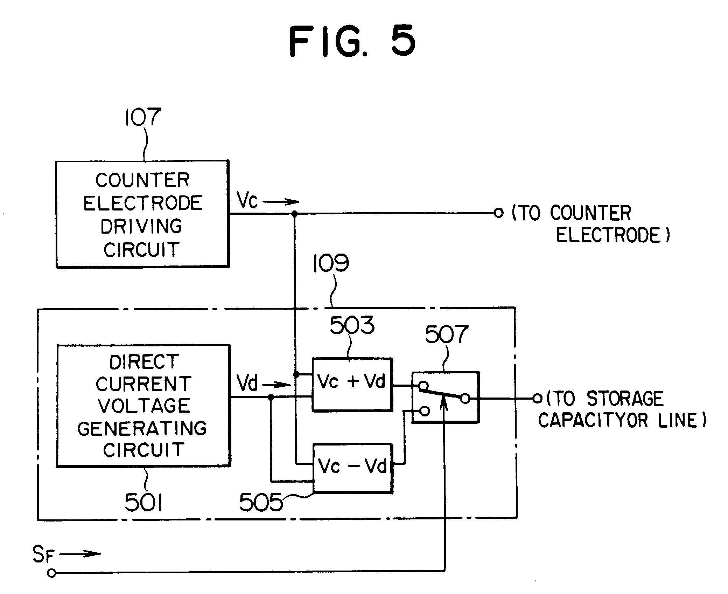

The main part of the storage capacitor line voltage generating circuit 109 is, as shown in Fig. 5, constructed of an addition circuit 503, a subtraction circuit 505 and a switching circuit 507. The addition circuit 503 adds the counter electrode voltage (Vc) of a direct current supplied by the counter electrode driving circuit 107 with a voltage (Vd) supplied by a direct current voltage generating circuit 501, and outputs the sum. The subtraction circuit 505 subtracts the voltage (Vd) supplied by the direct current voltage generating circuit 501 from the direct current voltage (Vc) supplied by the counter electrode driving circuit 107, and outputs the result. The switching circuit 507 selects the output from the addition circuit 503 or the output from the subtraction circuit 505 in accordance with a frame signal (SF) every one frame period (TF). As described above, inside the storage capacitor line voltage generating circuit 109, the added output of the direct current counter electrode voltage (Vc) and the above voltage (Vd), or the subtracted output thereof is selected alternately to apply a storage capacitor line voltage (VH) with an amplitude (dVH) to the storage capacitor line 143.

Referring to Figs. 3 and 4, operation of the active matrix type liquid crystal display device of the embodiment thus constructed will be described.

Fig. 3 is a view illustrating the equivalent circuit of one pixel part of the active matrix type liquid crystal display device. For example, a pixel, i. e., a display pixel (Xi, Yj) which exists in the intersection of the signal line 123 and scanning line 125 will be described. As shown in Fig. 4 (d), if an image signal voltage (VXi) is applied to the drain electrode 135 and a scanning pulse (VYj) is applied to the gate electrode 129, a drain/source current (IDS) flows between the drain electrode 135 and source electrode 139. Then, the image signal voltage (VXi) is written in the pixel electrode 137 connected to the source electrode 139. A pixel electrode potential (Vs), as shown in Fig. 4 (e), is held in the pixel electrode 137. Thus, for one frame period (TF), the electric potential difference between the pixel electrode potential (Vs) and counter electrode potential (Vc) is held in a liquid crystal capacitor (CLC) 153, thereby exciting the liquid crystal composition 115 to effect display. Electric potential difference between the pixel electrode potential (Vs) and storage capacitor line potential (VH) is held in the storage capacitor (Cs) 145. The reduction of electric potential difference in the liquid crystal capacitor (CLC) 155 as time elapses is compensated to maintain display for one frame period (TF).

Furthermore, as shown in Fig. 3, in the n type TFT element 127, there inherently exist a parasitic capacitance (CGS) between the gate electrode 129 and source electrode 139, and another parasitic capacitance (CDS) between the drain electrode 135 and source electrode 139, from the view of the structure of the TFT element 127, and arrangement of the pixel electrode 137 and signal line 123. Thus, even if the TFT element 127 becomes turned off (high resistant state), electric potential difference, which is held in the liquid crystal capacitor (CLC) 155 and storage capacitor (Cs) 145 once, is changed by the potential change of the signal line via the parasitic capacitances (CDS), (CGS). As a result, the potential of the pixel electrode 137, further more the liquid crystal applying voltage is changed. In the conventional liquid crystal display device, this causes a level shift (ΔV2).

According to the liquid crystal display device of the present invention, a storage capacitor line voltage (VH) corresponding to the level shift (ΔV2) is applied to the storage capacitor line 143. As a result, the electric potential difference of the liquid crystal capacitor (CLC) 155 or storage capacitor (Cs) 145, which was changed by the parasitic capacitances (CDS), (CGS), can be compensated, thereby allowing the level shift (ΔV2) to disappear.

Such a storage capacitor line voltage (VH), which lets the level shift (ΔV2) to disappear, will be described in detail.

The voltage ΔV2 [V] of the level shift (ΔV2) is represented by the following equation:$\text{ΔV2 = ( CDS • dVX + Cs • dVH ) / ( CGS + CDS + CLC + Cs )}$ wherein dVH [V] is the amplitude of the storage capacitor line voltage (VH); dVX [V] is the amplitude of the image signal voltage (VX); Cs [F] is the capacity of the storage capacitor (Cs) 145; CLC [F] is the capacity of the liquid crystal capacitor (CLC) 155; and CGS [F] and CDS [F] are the values of the parasitic capacities (CGS) and (CDS), respectively.

In the present invention, the polarity of the storage capacitor line voltage (VH) is inverted against a second standard potential (VT2) synchronized with the image signal voltage (VX) to be opposite to that of the image signal voltage (VX). The amplitude (dVH) of the storage capacitor line voltage (VH) is |-CDS•dVX/Cs|. This storage capacitor line voltage (VH) is applied to the storage capacitor line 143 of the storage capacitor (Cs) 145 to let the level shift (ΔV2) represented by the above equation to 0 (zero). Accordingly occurrence of flickers or nonuniformity of brightness is suppressed, thus obtaining a display image with a high quality.

Moreover, in the embodiment, with respect to a level shift (ΔV1) which occurs in the liquid crystal applying voltage due to the parasitic capacitance (CGS) of the TFT element 127, a bias voltage, whose effective value compensates the level shift (ΔV1), is applied to the counter electrode 151. As a result, as shown in Fig. 4 (d), the counter electrode potential (Vc) is deviated from the standard potential (VT1) of the image signal voltage (VX) to compensate the level shift (ΔV1).

In the above embodiment, the amplitude (dVH) of the storage capacitor line voltage (VH) is set up at a value which compensates the level shift (ΔV2) without shortage or excess, that is, |-CDS•dVX/Cs|. However, if the amplitude (dVH) is set up at |-CDS•dVX/Cs|/5 or more, advantageous effects sufficient for practical use can be obtained. Further, the amplitude (dVH) may be set up at |(-CDS•dVX/Cs)|x10 as a maximum, preferably |(-CDS•dVX/Cs)|x4 or less. In this range, advantageous effects sufficient to be visually recognized can be obtained. Thus, the amplitude (dVH) is not limited to |-CDS•dVX/Cs|.

As described above, a predetermined storage capacitor line voltage (VH) is applied to the storage capacitor line 143 so that change of the potential of the counter electrode 151, in accordance with change of the image signal voltage (VX) applied to the signal line 123, can be reduced, thus obtaining a display image with a high quality. Taking such potential change of the counter electrode 151 into consideration, the amplitude (dVH) of the storage capacitor line voltage (VH) is preferably set up at a large value in the above range. Namely, the amplitude (dVH) is preferably |-CDS•dVX/Cs| or more.

Further, in the embodiment, the second standard potential (VT2) is the same as the counter electrode potential (Vc). However, a voltage, which is applied to the addition circuit 503 and subtraction circuit 505 constituting the storage capacitor line voltage generating circuit 109, may be different from the direct current voltage (Vc) supplied from the counter electrode driving circuit 107. Thus, the second standard potential (VT2) may be different from the counter electrode potential (Vc).

A liquid crystal display device of the second embodiment will now be described below. The description regarding the same parts as those of the first embodiment is omitted for simplification. The parts different from those of the first embodiment will be described. The same part as those of the first embodiment are denoted by the same reference number.

A counter electrode 151, as shown in Fig. 3, is connected to a counter electrode driving circuit 107, which generates a counter electrode voltage (Vc) whose polarity is inverted against a second standard potential (VT2) synchronized with an image signal voltage (VX).

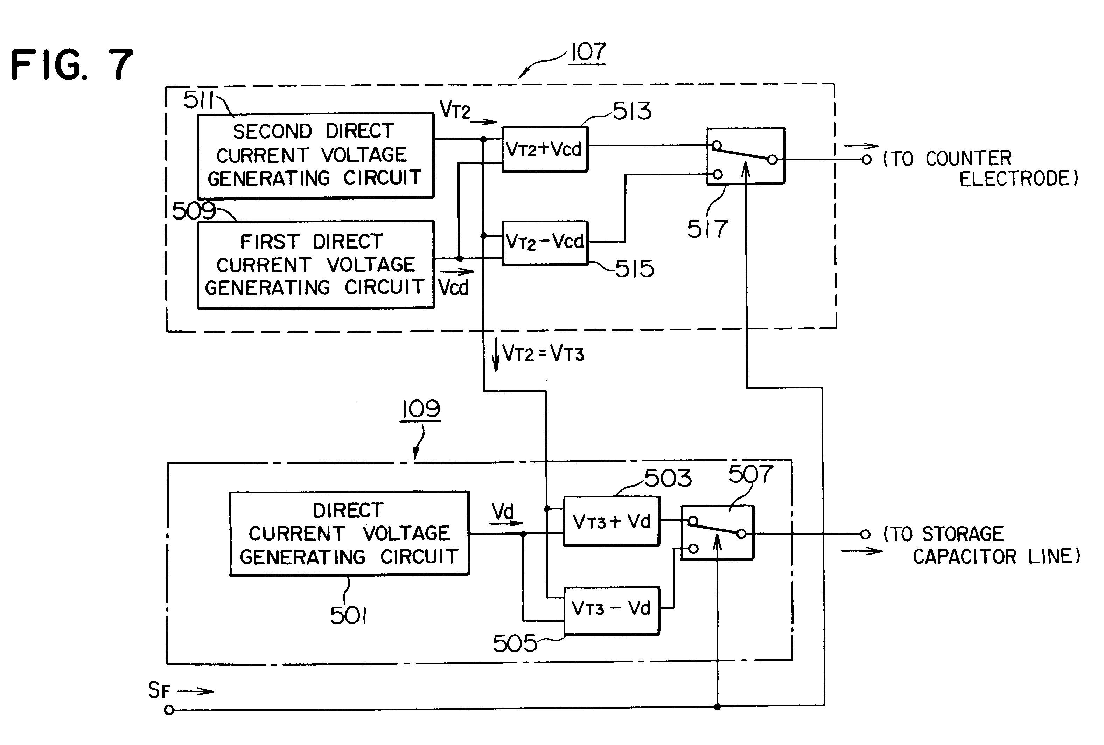

Referring to Fig. 7, the main part of the counter electrode driving circuit 107 is constructed of a first direct current voltage generating circuit 509, a second direct current generating circuit 511, an addition circuit 513, a subtraction circuit 515 and a switching circuit 517. The first direct current generating circuit 509 generates a voltage (Vcd) determining the amplitude of the counter electrode voltage (Vc). The second direct current voltage generating circuit 511 generates the second standard potential (VT2). The addition circuit 513 adds the second standard potential (VT2) supplied by the second direct current voltage generating circuit 511 with the voltage (Vcd) supplied by the first direct current voltage generating circuit 509, and outputs the sum. The subtraction circuit 515 subtracts the amplitude voltage (Vcd) supplied by the first direct current voltage generating circuit 509 from the second standard potential (VT2) supplied by the second direct current voltage generating circuit 511, and outputs the result. The switching circuit 517 selects the output from the addition circuit 513 or the output from the subtraction circuit 515 on the basis of a frame signal (SF) every one frame period (TF).

The main part of a storage capacitor line voltage generating circuit 109 is constructed of an addition circuit 503, a subtraction circuit 505 and a switching circuit 507. The second standard potential (VT2), which is supplied from the second direct current voltage generating circuit 511 of the counter electrode driving circuit 107, is used as a third standard potential (VT3). The addition circuit 503 adds the third standard potential (VT3) with a voltage (Vd) supplied by the direct current voltage generating circuit 501, and outputs the sum. The subtraction circuit 505 subtracts the voltage (Vd) supplied from the direct current voltage generating circuit 501 from the third standard potential (VT3), and outputs the result. The switching circuit 507 selects the output from the addition circuit 503 or the output from the subtraction circuit 505 on the basis of a frame signal (SF) every one frame period (TF).

As described above, inside the storage capacitor line voltage generating circuit 109, the third standard potential (VT3) of the direct current is subjected to the above addition or subtraction of the voltage (Vd). The output of the addition or subtraction is alternately selected to apply a storage capacitor line voltage (VH) with an amplitude (dVH) to a storage capacitor line 143.

At this time, the third standard potential (VT3) with the same potential as that of the second standard potential (VT2) supplied from the second direct current voltage generating circuit 511, and the voltage (Vd) supplied from the direct current voltage generating circuit 501 are set such that the amplitude (dVH) of the storage capacitor line voltage (VH) is |[(CGS+CDS+Cs)•dVc-CDS•dVX]/Cs|.

In the liquid crystal display device of the second embodiment, the storage capacitor line voltage (VH) corresponding to a level shift (ΔV2) is applied to the storage capacitor line 143. As a result, the electric potential difference of a liquid crystal capacitor (CLC) 155 changed by a parasitic capacitances (CDS), (CGS) and the electric potential difference of a storage capacitor (Cs) 145 are compensated to let the level shift (ΔV2) to disappear.

The voltage ΔV2 [V] of the level shift (ΔV2) is represented by the following equation: 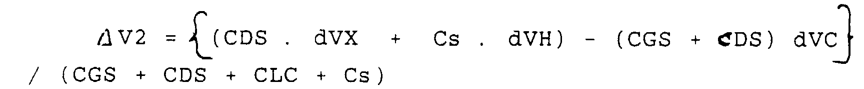 wherein dVC [V] is the amplitude of the counter electrode voltage (Vc); dVH [V] is the amplitude of the storage capacitor line voltage (VH); dVX [V] is the amplitude of the image signal voltage (VX); Cs [F] is the capacity value of the storage capacitor (Cs) 145; CLC [F] is the capacity value of the liquid crystal capacitor (CLC) 155; and CGS [F] and CDS [F] are the capacity values of the parasitic capacities (CGS) and (CDS), respectively.

The polarity of the storage capacitor line voltage (VH) is inverted against the third standard potential (VT3) synchronized with the counter electrode voltage to be the same as that of the counter electrode voltage (Vc) against the second standard potential (VT2). The amplitude (dVH) of the storage capacitor line voltage (VH) is |[(CGS+CDS+Cs)•dVc-CDS•dVX]/Cs|. Such a storage capacitor line voltage (VH) is applied to the storage capacitor line 143 to remove the level shift (ΔV2) represented by the above equation and suppress the occurrence of flickers and nonuniformity of brightness, thereby obtaining a display image with a high quality.

Further, in this embodiment, with respect to a level shift (ΔV1) which occurs due to the parasitic capacitance (CGS) of a TFT element 127, a bias voltage, whose effective value compensates the level shift (ΔV1), is added to the counter electrode voltage (Vc) which is applied to the counter electrode 151. In other words, as shown in Fig. 4 (d), the standard potential (VT2) of the counter electrode potential (Vc) is shifted against the standard potential (VT1) of the image signal voltage (VX) to remove the level shift (ΔV1).

In the above embodiment, the amplitude (dVH) of the storage capacitor line voltage (VH) is set up at the best value which most effectively compensates the level shift (ΔV2), i. e., |[(CGS+CDS+Cs)•dVc-CDS•dVX/Cs|. However, if the amplitude (dVH) is set up at |[(CGS+CDS+Cs)•dVc-CDS•dVX/Cs|/5 or more, advantageous effects sufficient for practical use can be obtained. If the maximum of the amplitude (dVH) is |[(CGS+CDS+Cs)•dVc-CDS•dVX]/Cs]x10 or less, preferably |[(CGS+CDS+Cs)•dVc-CDS•dVX]/Cs|x4 or less, advantageous effects sufficient to be visually recognized can be obtained. Thus, it is not necessary that the amplitude (dVH) is limited to the above best value.

Further, for the purpose of reducing potential change of the counter electrode 151, the amplitude (dVH) of the storage capacitor line voltage (VH) is preferably set up at a large value within the above range. The amplitude (dVH) is preferably |[(CGS+CDS+Cs)•dVc-CDS•dVX]/Cs| or more.

The counter electrode driving circuit 107 generates the counter electrode voltage (Vc) with the amplitude dVc, whose polarity is inverted against the second standard potential (VT2) every one frame period, and supplies it to the counter electrode 151.

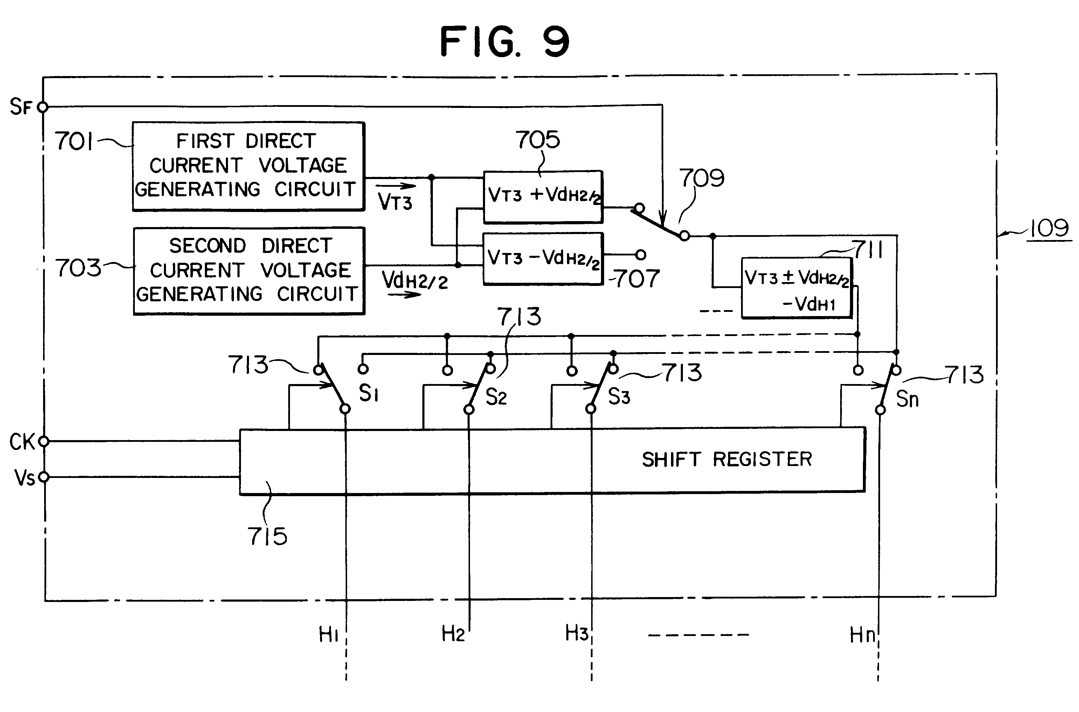

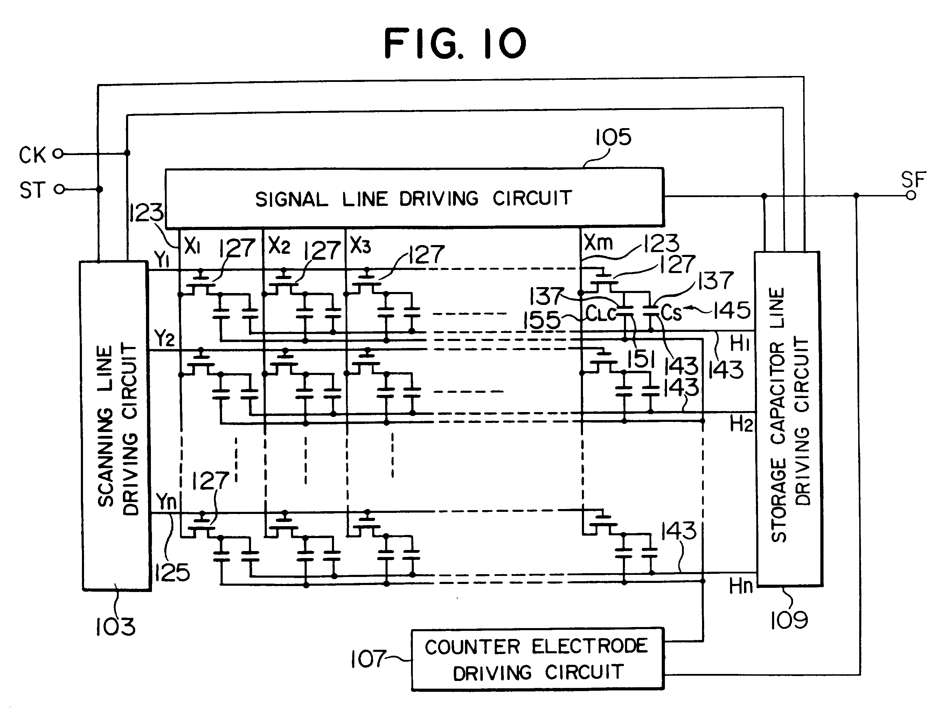

As shown in Figs. 9 and 10, a main part of a storage capacitor line driving circuit 109 is constructed of a first direct current voltage generating circuit 701, a second direct current voltage generating circuit 703, an addition circuit 705, a subtraction circuit 707, a first switching circuit 709, a second subtraction circuit 711, a second switching circuit 713, and a shift register 715. The first direct current voltage generating circuit 701 generates a third standard potential (VT3) against which a storage capacitor line voltage (VH) is inverted. The second direct current voltage generating circuit 703 generates a voltage (VdH2/2) determining the amplitude (dVH2). The addition circuit 705 adds the third standard potential (VT3) with the voltage (VdH2/2). The subtraction circuit 707 subtracts the voltage (VdH2/2) from the third standard potential (VT3). The first switching circuit 709 selects the output from the addition circuit 705 or the output from the subtraction circuit 707 on the basis of a frame signal (SF) every one frame period (TF). The second subtraction circuit 711 subtracts a voltage (VdH1), which determines a voltage change (dVH1) in the direction opposite to the scanning pulse, from the output selected by the switching circuit 709. The second switching circuit 713 select one of the output directly from the first switching circuit 709 and the output via the second subtraction circuit 711. The shift register 715 controls the second switching circuit 713 on the basis of a clock pulse (CK) and start signal (ST), which are similar to those inputted to a scanning line driving circuit 103.

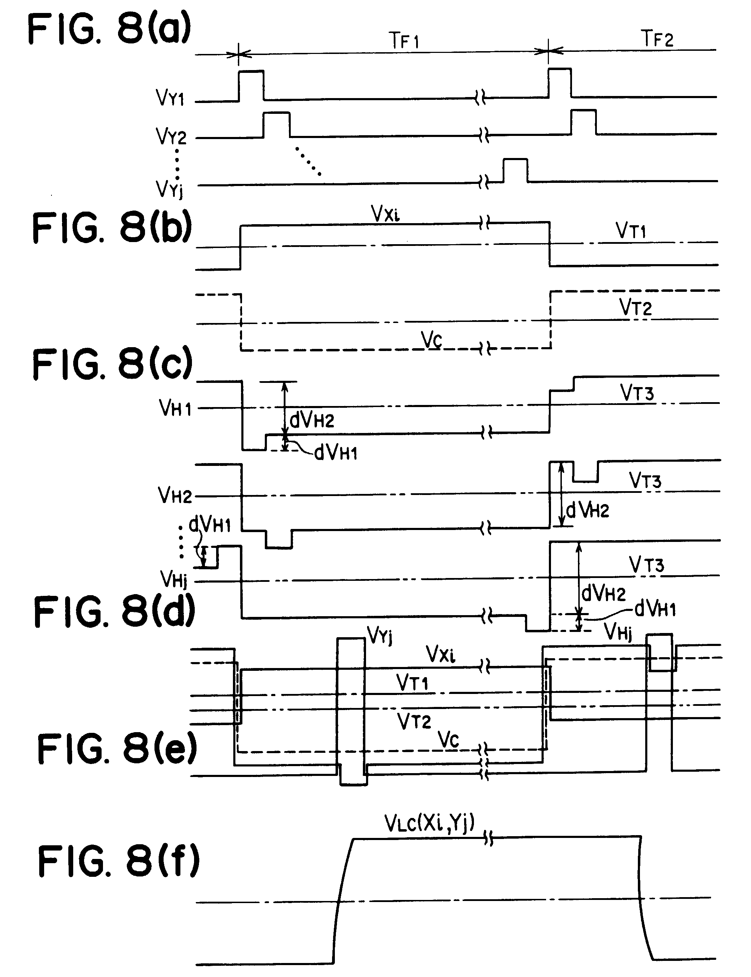

The storage capacitor line driving circuit 109 selects the added output of the voltage (VdH2) and the direct current third standard potential (VT3), or the subtracted output of the voltage (VdH2) and the third standard potential (VT3), alternately. As a result, as shown in Fig. 8 (d), the storage capacitor line voltage (VH) with the amplitude (dVH2) is applied to a storage capacitor line 143. The voltage (VdH1) is subtracted from the output from the second switching circuit 713 on the basis of the clock pulse (CK) and start signal (ST) so that, as shown in Fig. 8 (d), the storage capacitor line voltage (VH) is changed in the direction opposite to the scanning pulse by a voltage change (dVH1). The resultant storage capacitor line voltage (VH) is applied to the storage capacitor line 143.

In the liquid crystal display device of the present invention, the storage capacitor line voltage (VH) has the voltage change (dVH1) and the voltage amplitude (dVH2) which suppress the level shifts (ΔV1), (ΔV2), respectively. This storage capacitor line voltage (VH) is applied to each storage capacitor line 143. For example, a storage capacitor line voltage (VHj), which is synchronized with a timing where a scanning pulse is applied to the j-th scanning pulse 125, is applied to the j-th storage capacitor line 143. As a result, this compensates electric potential difference of a liquid crystal capacitor (CLC) 155 changed by parasitic capacitances (CGS), (CDS), to remove the level shifts (ΔV1), (ΔV2).

Such a storage capacitor line voltage (VH), which removes the level shifts (ΔV1), (ΔV2), will be described in detail.

The voltages ΔV1 [V], ΔV2 [V] of the level shifts (ΔV1), (ΔV2) are represented by the following equations:$\text{ΔV1 = (CGS•dVY+Cs•dVH)/(CGS+CDS+CLC+Cs)}$${\text{ΔV2 = {CDS•[VX}}_{\text{(TF1)}} {\text{-VX}}_{\text{(TF2)}} {\text{]+Cs•dVH2-(CGS+CDS)[Vc}}_{\text{(TF1)}} \text{-} {\text{Vc}}_{\text{(TF2)}} \text{]}/(CGS+CDS+CLC+Cs)}$ wherein dVY [V] is the amplitude of the scanning pulse (VY); dVH1 [V] is the voltage change of the storage capacitor line voltage; dVH2 [V] is the voltage amplitude; VX_{(TF1)} [V] is the image signal voltage (VX) for a frame period (TF1); Vc_{(TF1)} [V] is the counter electrode voltage (Vc); VX_{(TF2)} [V] is the image signal voltage (VX) for next frame period (TF2) after the frame period (TF1); Vc_{(TF2)} [V] is the counter electrode voltage (Vc); Cs [F] is the capacity value of the storage capacitor (Cs) 145; CLC [F] is the capacity value of the liquid crystal capacitor (CLC) 155; and CGS [F] and CDS [F] are the capacity values of the parasitic capacities (CGS) and (CDS), respectively.

In the liquid crystal display device of the present invention, the polarity of a storage capacitor line voltage (VHj) is inverted against the third standard potential synchronized with a counter electrode voltage (Vc) to be the same as that of the counter electrode voltage (Vc). The storage capacitor line voltage (VHj) is controlled such that the amplitude (dVH2) thereof is dVH2=|[CGS+CDS+Cs)(Vc_{(TF1)}-Vc_{(TF2)}-CDS(VX_{(TF1)}-VX_{(TF2)})]/Cs|. The voltage of the storage capacitor line voltage (VHj) is controlled to be changed in the direction opposite to the scanning pulse synchronized with a scanning pulse (VYj) by a changed amount, dVH1=|-CGS•dVY/Cs|. Such a storage capacitor line voltage (VHj) is applied to the j-th storage capacitor line 143 synchronized with the timing of the scanning pulse (VYj). The j-th storage capacitor line 143 corresponds to a pixel electrode 137 connected to a TFT element 127, which is applied with the scanning pulse (VYj) via the j-th scanning line 125. As a result, the level shifts (ΔV1), (ΔV2) can be most effectively suppressed.

Since the value of above (VX_{(TF1)}-VX_{(TF2)}) is changed every moment for image display, the middle voltage between the maximum and minimum values of the image signal voltage (VX) is actually used in this embodiment.

In this embodiment, the amplitude (dVH2) of the storage capacitor line voltage (VH) is set up at the value which can most effectively disappear the level shift (ΔV2). However, the amplitude (dVH2) is not limited to this value. If the amplitude (dVH2) is set up at |[CGS+CDS+Cs)(Vc_{(TF1)}-Vc_{(TF2)})-CDS(VX_{(TF1)}-VX_{(TF2)})]/Cs|/5 or more, advantageous effects for practical use can be obtained. If the maximum thereof is |[CGS+CDS+Cs)(Vc_{(TF1)}-Vc_{(TF2)})-CDS(VX_{(TF1)}-VX_{(TF2)})]Cs|x10, preferably |[CGS+CDS+Cs)(Vc_{(TF1)}-Vc_{(TF2)})-CDS(VX_{(TF1)}-VX_{(TF2)})]Cs|x4, advantageous effects which is visually recognized can be obtained.

In the case of applying a counter electrode voltage (Vc) whose polarity is inverted against the second standard potential periodically, distortion may occur in the counter electrode voltage (Vc) dependent on the value of the liquid crystal capacitor (CLC) at the time of polarity inversion. This may cause nonuniformity of brightness in the directions of the signal line and the scanning line. However, the certain storage capacitor line voltage (VH) is applied to the storage capacitor 145 to reduce the potential change of a counter electrode 151 accompanied with the change of an image signal voltage (VX) to be applied to a signal line 123. As a result, a display image with a high quality can be obtained. Taking such decrease of the potential change of the counter electrode 151 into consideration, the amplitude (dVH2) of the storage capacitor line voltage (VH) is preferably set up at a large value in the above range. The value is preferably |[CGS+CDS+Cs)(Vc_{(TF1)}-Vc_{(TF2)})-CDS(VX_{(TF1)}-VX_{(TF2)})]/Cs| or more.

In the above embodiments, the case, where the image signal voltage (VX) is inverted against the standard potential every one frame period (TF), is exemplified. However, even in the case where the image signal voltage (VX) is inverted every one scanning line, or a plurality of scanning lines, a storage capacitor line voltage (VH), which compensates the level shift (ΔV2), is applied to the storage capacitor line 143, thereby obtaining similar advantageous effects.

In the above embodiments, although the second standard potential (VT2) is set up at the same potential as the third standard potential (VT3), the second standard potential (VT2) may be set up at different potentials.

Further, in the above embodiments, although the first standard potential (VT1) is set up at a potential different from that of the second standard potential (VT2), this is not limitation. The first standard potential (VT1) may be set up at the same potential as the second standard potential (VT2). However, in this case, the effect of suppressing ΔV1 by an off-set voltage becomes lost. Thus, it is necessary that ΔV1 itself is ignored, assuming ΔV1 is small enough not to disturb the practical use of an image display. Alternatively, there needs another means for removing ΔV1.

In the above embodiments, the polarity of the image signal voltage (VX) is inverted against one kind of the first standard potential (VT1). However, the technique of the present invention can be applied to the case of setting a plurality of kinds of standard potentials of the image signal voltage (VX) such as multi-gradation display.

Obviously, numerous (additional) modifications, for example, modification of a TFT material or structure, are possible within the scope of the appended claims.

## Claims

1. A liquid crystal display device comprising:
matrix wiring having a plurality of scanning lines (125) and a plurality of signal lines (123) disposed to intersect with the plurality of scanning lines, wherein a scanning pulse is applied to the scanning lines (125), and an image signal voltage having a polarity periodically inverted with respect to a first standard potential is applied to the signal lines (123);
a pixel electrode (137) disposed at each intersection of the plurality of scanning lines (125) and the plurality of signal lines (123);
a transistor switching element (127) included at each intersection of the plurality of scanning lines (125) and the plurality of signal lines (123) and connected to each pixel electrode (137);
a storage capacitor formed between the pixel electrode (136) and a storage capacitor line (143);
a counter electrode (151) disposed opposite to the pixel electrode (137);
a liquid crystal composition (115), held between the pixel electrode (137) and the counter electrode (151); and
means for supplying a storage capacitor line voltage to the storage capacitor line (143);
characterised in that the supplying means comprise a generating circuit generating the storage capacitor line voltage, the polarity of which is inverted with respect to a second standard potential while substantially synchronized with the polarity inversion of the image signal voltage, and the storage capacitor line voltage which is applied to the storage capacitor line (143) so as to compensate for a first change of a liquid crystal voltage generated between the pixel electrode (137) and the counter electrode (151) substantially synchronized with the polarity inversion of the image signal voltage.

2. The liquid crystal display device of claim 1, further comprising counter electrode driving means for supplying a direct current voltage to the counter electrode.

3. The liquid crystal display device of claim 2, wherein an amplitude of the storage capacitor line voltage, substantially synchronized with the image signal voltage, is in the range of |(-CDS•dVX/Cs)|/5 to (-CDS•dVX/Cs)| x 10,
wherein CDS is a parasitic capacitance associated with a drain electrode (135) of the transistor switching element (127) and a source electrode (139) of the transistor switching element (127), dVX is an amplitude of the image signal voltage, and CS is a capacitance of the storage capacitor.

4. The liquid crystal display device of claim 3, wherein the amplitude of the storage capacitor line voltage substantially synchronized with the image signal voltage is |(-CDS•dVX/Cs)|.

5. The liquid crystal display device of claim 1, wherein the counter electrode (151) is connected to counter electrode voltage driving means for supplying a counter electrode voltage having a counter voltage polarity inverted with respect to a third standard potential while synchronized with the image signal voltage and having a polarity inverted with respect to the third standard potential whose polarity is the same as that of the storage capacitor line voltage inverted with respect to the second standard potential.

6. The liquid crystal display device of claim 5, wherein the amplitude of the storage capacitor line voltage is larger than that of the counter electrode voltage substantially synchronizing with the image signal voltage.

7. The liquid crystal display device of claim 5, wherein the amplitude of the storage capacitor line voltage substantially synchronizing with the image signal voltage is in the range of |[(CGS+CDS+Cs)•dVc-CDS•dVX]/Cs|/5 to |[(CGS+CDS+ Cs)•dVC-CDS•dVX]/Cs| x 10,
wherein CGS is a parasitic capacitance associated with a gate electrode and a source electrode of the transistor switching element (127), CDS is a parasitic capacitance associated with a drain electrode and a source electrode of the transistor switching element (127), dVc is an amplitude of the counter electrode voltage applied to the counter electrode (151), dVX is an amplitude of the image signal voltage, and Cs is a capacitance of the storage capacitor.

8. The liquid crystal display device of claim 7, wherein the amplitude of the storage capacitor line voltage is |[(CGS+CDS+Cs)•dVc-CDS•dVX]/Cs|.

9. The liquid crystal display device of claim 2, wherein the storage capacitor line voltage, the potential of which changes while substantially synchronized with the scanning pulse so as to compensate for a second change of liquid crystal applying voltage substantially synchronized with the scanning pulse, is applied to the storage capacitor line.

10. The liquid crystal display device of claim 9, wherein a change of the storage capacitor line voltage substantially synchronized with the scanning pulse, is in the range of |(-CGS•dVY)/Cs |/2 to |(-CGS•dVY)]/Cs| x 2,
wherein CGS is a parasitic capacitance between a gate electrode and a source electrode of the transistor switching element (127). dVY is an amplitude of the scanning pulse and Cs is a capacitance of the storage capacitor.

11. The liquid crystal display device of claim 10, wherein the change of the storage capacitor line voltage, substantially synchronized with the scanning pulse is |(-CGS• dVY)]/Cs|.

12. The liquid crystal display device of claim 9, wherein a change of the storage capacitor line voltage, substantially synchronized with the image signal voltage, is in the range of |-CDS•[VX(TF1)-VX(TF2)]/Cs|/5 to |-CDS•[VX(TF1)-VX(TF2)] /Cs| x 5,
wherein CDS is a parasitic capacitance associated with a drain electrode and a source electrode of the transistor switching element (127), VX(TF1) is an image signal voltage for one period (TF1), VX(TF2) is an image signal voltage for a next period (TF2) and Cs is a capacitance of the storage capacitor.

13. The liquid crystal display device of claim 12, wherein the potential change of the storage capacitor line voltage substantially synchronized with the image signal voltage is |-CDS [VX(TF1)-VX(TF2)]/Cs|.

14. The liquid crystal display device of claim 5, wherein the potential of which changes while substantially synchronized with the scanning pulse so as to compensate a second change of liquid crystal applying voltage substantially synchronized with the scanning pulse, is applied to the storage capacitor line.

15. The liquid crystal display device of claim 14, wherein a change of the storage capacitor line voltage substantially synchronized with the scanning pulse is in the range of |(-CGS•dVY)]/Cs|/2 to |(-CGS•dVY)]/Cs| x 2, wherein CGS is a parasitic capacitance associated with a gate electrode and a source electrode of the transistor switching element (127), dVY is an amplitude of the scanning pulse and Cs is a capacitance of the storage capacitor.

16. The liquid crystal display device of claim 15, wherein the change of the storage capacitor line voltage substantially synchronized with the scanning pulse is |(-CGS •dVY)]/Cs|.

17. The liquid crystal display device of claim 14, wherein a change of the storage capacitor line voltage substantially synchronized with the polarity inversion of the image signal voltage, is in the range of |{(CGS +CDS +Cs) [Vc(TF1)-Vc(TF2)]-CDS•[VX(TF1)-VX(TF2)]}/Cs|/5 to |{(CGS+CDS+Cs)[Vc(TF1)-Vc(TF2) ]-CDS•[VX(TF1)-VX(TF2)]}/Cs| x 10,
wherein CGS is a parasitic capacitance associated with a gate electrode and a source electrode of the transistor switching element (127), CDS is a parasitic capacitance associated with a drain electrode and a source electrode of the transistor switching element (127), Cs is a capacitance of the storage capacitor, VC(TF1) is a counter electrode voltage for one period (TF1), VC(TF2) is a counter electrode for a next period (TF2), VX(TF1) is an image signal voltage for one period (TF1), and VX(TF2) is an image signal for a next period (TF2).

18. The liquid crystal display device of claim 17, wherein the change of the storage capacitor line voltage, substantially synchronized with the polarity inversion of the image signal voltage, is |(CGS+CDS+Cs)•[Vc(TF1)-Vc(TF2)]-CDS• [VX(TF1)-VX(TF2)]}/Cs|.

19. A liquid crystal display device comprising:
matrix wiring having a plurality of scanning lines (125) and a plurality of signal lines (123) disposed to intersect with the plurality of scanning lines (125), wherein a scanning pulse is applied to the scanning lines (125), and an image signal voltage, having a polarity periodically inverted with respect to a first standard potential, is applied to the signal lines (123);
a pixel electrode (137) disposed at each intersection of the plurality of scanning lines (125) and the plurality of signal lines (123);
a transistor switching element (127) included at each intersection of the plurality of scanning lines (125) and the plurality of signal lines (123) and connected to each pixel electrode (137);
a counter electrode (151) disposed opposite to the pixel electrode (137);
a liquid crystal composition (115), held between the pixel electrode (137) and the counter electrode (151);
a storage capacitor formed between the pixel electrode (137) and a storage capacitor line (143); and
means for supplying a storage capacitor line voltage to the storage capacitor line (143),
characterised in that the supplying means comprises a generating circuit generating the storage capacitor line voltage, a potential level of which is changed substantially synchronized with the scanning pulse, and a direction of the potential level change of the storage capacitor line voltage is opposite to a direction of a potential level change of the scanning pulse, so as to compensate for a change of a liquid crystal voltage (V1) generated between the pixel electrode and the counter electrode substantially synchronized with the scanning pulse.

20. The liquid crystal display device of claim 19, further comprising counter electrode driving means for supplying a direct current voltage to the counter electrode, the counter electrode driving means being connected to the counter electrode.

21. The liquid crystal display device of claim 20, wherein a change of the storage capacitor line voltage substantially synchronized with the scanning pulse, is in the range of |(-CGS•dVY)/Cs |/2 to |(-CGS•dVY)]/Cs| x 2,
wherein CGS is a parasitic capacitance associated with a gate electrode and a source electrode of the transistor switching element (127), dVY is an amplitude of the scanning pulse and Cs is a capacitance of the storage capacitor.

22. The liquid crystal display device of claim 21, wherein the potential change of the storage capacitor line voltage is |(-CGS•dVY)]/Cs|.

23. The liquid crystal display device of claim 19, further comprising counter electrode driving means for applying a current electrode voltage, having a counter electrode voltage polarity inverted with respect to a second standard potential while substantially synchronized with the image signal voltage, to the counter electrode.

24. The liquid crystal display device of claim 23, wherein a change of storage capacitor line voltage substantially synchronized with the scanning pulse, is in the range of |(-CGS•dVY)/Cs |/2 to |(-CGS•dVY)]/Cs| x 2,
wherein CGS is a parasitic capacitance between a gate electrode and a source electrode of the transistor switching element, dVY is an amplitude of the scanning pulse and Cs is a capacitance of the storage capacitor.

25. The liquid crystal display device of claim 24, wherein the change of the storage capacitor line voltage is |(-CGS•dVY)]/Cs|.

## Patentansprüche

1. Flüssigkristallanzeigegerät, welches aufweist:
eine Matrixschaltung mit einer Mehrzahl von Abtastleitungen (125) und einer Mehrzahl von Signalleitungen (123), die angeordnet sind, um sich mit der Mehrzahl der Abtastleitungen zu kreuzen, wobei ein Abtastpuls an die Abtastleitungen (125) angelegt ist, und eine Bildsignalspannung mit einer periodisch umgekehrten Polarität bezüglich eines ersten Standardpotentials an die Signalleitungen (123) angelegt ist;
eine Pixel-Elektrode (137), die jeweils an einem Kreuzungspunkt der Mehrzahl von Abtastleitungen (125) und der Mehrzahl von Signalleitungen (123) angeordnet ist;
ein Transistorschaltelement (127), das an jedem Kreuzungspunkt der Mehrzahl der Abtastleitungen (125) und der Mehrzahl der Signalleitungen (123) enthalten und jeweils mit der Pixel-Elektrode (137) verbunden ist;
einen Speicherkondensator, der zwischen der Pixel-Elektrode (137) und der Speicherkondensatorleitung (143) ausgebildet ist;
eine Gegenelektrode (151), die gegenüber der Pixel-Elektrode (137) angeordnet ist;
eine Flüssigkristallmischung (115), die zwischen der Pixel-Elektrode (137) und der Gegenelektrode (151) gehalten ist; und
eine Einrichtung zum Liefern einer Speicherkondensatorleitungsspannung an die Speicherkondensatorleitung (143),
dadurch gekennzeichnet, daß die Liefereinrichtung einen Erzeugerkreis enthält, der die Speicherkondensatorleitungsspannung erzeugt, deren Polarität bezüglich eines zweiten Standardpotentials umgekehrt ist, während sie im wesentlichen mit der Polaritätsumkehr der Bildsignalspannung synchronisiert ist, und daß die Speicherkondensatorleitungsspannung, die an die Speicherkondensatorleitung (143) angelegt ist, um eine erste Änderung einer Flüssigkristallspannung zu kompensieren, die zwischen der Pixel-Elektrode (137) und der Gegenelektrode (151) erzeugt wird, im wesentlichen mit der Polaritätsumkehr der Bildsignal spannung synchronisiert ist.

2. Flüssigkristallanzeigegerät nach Anspruch 1, weiter enthaltend eine Gegenelektrodensteuereinrichtung, um eine Gleichstromspannung an die Gegenelektrode zu liefern.

3. Flüssigkristallanzeigegerät gemäß Anspruch 2, wobei eine Amplitude der Speicherkondensatorleitungsspannung, im wesentlichen synchronisiert mit der Bildsignalspannung im Bereich von |(-CDS·dVX/Cs|/5 bis |(-CDS·dVX/Cs)|x10 ist,
wobei CDS eine Störkapazität ist, die mit einer Drain-Elektrode (135) des Transistorschaltelements (127) und einer Source-Elektrode (139) des Transistorschaltelements (127) ist, dVX eine Amplitude der Bildsignalspannung und Cs eine Kapazität des Speicherkondensators ist.

4. Flüssigkristallanzeigegerät nach Anspruch 3, wobei die Amplitude der Speicherkondensatorleitungsspannung, die im wesentlichen mit der Bildsignalspannung synchronisiert ist, |(-CDS·dVX/Cs)| ist.

5. Flüssigkristallanzeigegerät nach Anspruch 1, wobei die Gegenelektrode (151) mit der Steuereinrichtung für die Gegenelektrodenspannung zum Liefern einer Gegenelektrodenspannung verbunden ist, die eine Gegenspannungspolarität besitzt, die bezüglich eines dritten Standardpotentials umgekehrt ist, während sie mit der Bildsignalspannung synchronisiert ist und eine Polarität besitzt, die bezüglich des dritten Standardpotentials, dessen Polarität dieselbe ist wie die der Speicherkondensatorleitungsspannung, bezüglich des zweiten Standardpotentials umgekehrt ist.

6. Flüssigkristallanzeigegerät nach Anspruch 5, wobei die Amplitude der Speicherkondensatorleitungsspannung größer ist als die der Gegenelektrodenspannung, die im wesentlichen mit der Bildsignalspannung synchronisiert ist.

7. Flüssigkristallanzeigegerät nach Anspruch 5, wobei die Amplitude der Speicherkondensatorleitungsspannung, die im wesentlichen mit der Bildsignalspannung synchronisiert ist, im Bereich von |[(CGS+CDS+Cs)·dVC-CDS·dVX]/Cs|/5 bis |[(CGS+CDS+Cs)·dVC-CDS·dVX]/Cs|x10 ist,
wobei CGS eine Störkapazität ist, die mit einer Gate-Elektrode und einer Source-Elektrode des Transistorschaltelements (127) zugeordnet ist, CDS eine Störkapazität ist, die zu einer Drain-Elektrode und einer Source-Elektrode des Transistorschaltelements (127) zugeordnet ist, dVc eine Amplitude der an die Gegenelektrode (151) angelegten Gegenelektrodenspannung ist, dVX eine Amplitude der Bildsignalspannung ist und Cs eine Kapazität des Speicherkondensators ist.

8. Flüssigkristallanzeigegerät nach Anspruch 7, wobei die Amplitude der Speicherkondensatorleitungsspannung |[(CGS+CDS+Cs)·dVC-CDS·dVX]/Cs| ist.

9. Flüssigkristallanzeigegerät nach Anspruch 2, wobei die Speicherkondensatorleitungsspannung, deren Potential sich ändert, während es im wesentlichen mit dem Abtastpuls synchronisiert ist, um eine zweite Änderung der am Flüssigkristall anliegenden Spannung, die im wesentlichen mit dem Abtastpuls synchronisiert ist, zu kompensieren, an die Speicherkondensatorleitung angelegt ist.

10. Flüssigkristallanzeigegerät nach Anspruch 9, wobei eine Änderung der Speicherkondensatorleitungsspannung, die im wesentlichen mit dem Abtastpuls synchronisiert ist, im Bereich von |(-CGS·dVY/Cs|/2 bis |(-CGS·dVY)/Cs|x2 ist,
wobei CGS eine Störkapazität zwischen einer Gate-Elektrode und einer Source-Elektrode des Transistorschaltelements (127), dVY eine Amplitude des Abtastpulses und Cs eine Kapazität des Speicherkondensators ist.

11. Flüssigkristallanzeigegerät nach Anspruch 10, wobei die Änderung der Speicherkondensatorleitungsspannung, die im wesentlichen mit dem Abtastpuls synchronisiert ist, |(-CGS·dVY)/Cs| ist.

12. Flüssigkristallanzeigegerät nach Anspruch 9, wobei eine Änderung der Speicherkondensatorleitungsspannung, die im wesentlichen mit der Bildsignalspannung synchronisiert ist, im Bereich von |-CDS·[VX(TF1)-VX(TF2)]/Cs[/5 bis |-CDS·[VX(TF1)-VX(TF2)]/Cs|x5 ist,
wobei CDS eine Störkapazität ist, die einer Drain-Elektrode und einer Source-Elektrode des Transistorschaltelements (127) zugeordnet ist, VX(TF1) eine Bildsignalspannung für eine Periode (TF1) ist, VX(TF2) eine Bildsignalspannung für eine nächste Periode (TF2) und Cs eine Kapazität des Speicherkondensators ist.

13. Flüssigkristallanzeigegerät nach Anspruch 12, wobei die Potential-änderung der Speicherkondensatorleitungsspannung, die im wesentlichen mit der Bildsignal spannung synchronisiert ist, |-CDS·[VX(TF1)-VX(TF2)]/Cs| ist.

14. Flüssigkristallanzeigegerät nach Anspruch 5, wobei dessen Potential sich ändert, während es im wesentlichen mit dem Abtastpuls synchronisiert ist, um eine zweite Änderung der am Flüssigkristall anliegenden, im wesentlichen mit dem Abtastpuls synchronisierten Spannung zu kompensieren, und an die Speicherkondensatorleitung angelegt ist.

15. Flüssigkristallanzeigegerät nach Anspruch 14, wobei eine Änderung der Speicherkondensatorleitungsspannung, die im wesentlichen mit dem Abtastpuls synchronisiert ist, im Bereich von |(-CGS·dVY)/Cs|/2 bis |(-CGS·dVY)/Cs|x2 ist,
wobei CGS eine zu einer Gate-Elektrode und einer Source-Elektrode des Transistorschaltelements (127) zugeordnete Störkapazität ist, dVY eine Amplitude des Abtastpulses und Cs eine Kapazität des Speicherkondensators ist.

16. Flüssigkristallanzeigegerät nach Anspruch 15, wobei die Änderung der Speicherkondensatorleitungsspannung, die im wesentlichen mit dem Abtastpuls synchronisiert ist, |(-CGS·dVY)/Cs| ist.

17. Flüssigkristallanzeigegerät nach Anspruch 14, wobei eine Änderung der Speicherkondensatorleitungsspannung, die im wesentlichen mit der Polaritätsumkehr der Bildsignalspannung synchronisiert ist, in dem Bereich von |{(CGS+CDS+Cs)·[Vc(TF1)-Vc(TF2)]-CDS·[VX(TF1)-VX(TF2)]}/Cs|/5 bis |{(CGS+CDS+Cs)[Vc(TF1)-Vc(TF2)]-CDS·[VX(TF1)-VX(TF2)]}/Cs|x10 ist,
wobei CGS eine zu einer Gate-Elektrode und einer Source-Elektrode des Transistorschaltelements (127) zugeordneten Störkapazität ist, CDS eine zu einer Drain-Elektrode und einer Source-Elektrode des Transistorschaltelements (127) zugeordneten Störkapazität ist, Cs eine Kapazität des Speicherkondensators ist, VC(TF1) eine Gegenelektrodenspannung für eine Periode (TF1) ist, VC(TF2) eine Gegenelektrodenspannung für eine nächste Periode (TF2) ist, VX(TF1) eine Bildsignalspannung für eine Periode (TF1) ist, und VX(TF2) eine Bildsignalspannung für eine nächste Periode (TF2) ist.

18. Flüssigkristallanzeigegerät nach Anspruch 17, wobei die Änderung der Speicherkondensatorleitungsspannung, die im wesentlichen mit der Polaritätsumkehr der Bildsignalspannung synchronisiert ist, |(CGS+CDS+Cs)·[Vc(TF1)-Vc(TF2)]-CDS·[VX(TF1)-VX(TF2)]}/Cs| ist.

19. Flüssigkristallanzeigegerät, welches aufweist:
eine Matrixschaltung mit einer Mehrzahl von Abtastleitungen (125) und einer Mehrzahl von Signalleitungen (123), die angeordnet sind, um sich mit der Mehrzahl der Abtastleitungen (125) zu kreuzen, wobei ein Abtastpuls an die Abtastleitungen (125) angelegt ist, und eine Bildsignalspannung mit einer periodisch umgekehrten Polarität bezüglich eines ersten Standardpotentials an die Signalleitungen (123) angelegt ist;
eine Pixel-Elektrode (137), die jeweils an einem Kreuzungspunkt der Mehrzahl von Abtastleitungen (125) und der Mehrzahl von Signalleitungen (123) angeordnet ist;
ein Transistorschaltelement (127), das an jedem Kreuzungspunkt der Mehrzahl der Abtastleitungen (125) und der Mehrzahl der Signalleitungen (123) enthalten und jeweils mit der Pixel-Elektrode (137) verbunden ist;
eine Gegenelektrode (151), die gegenüber der Pixel-Elektrode (137) angeordnet ist;
eine Flüssigkristallmischung (115), die zwischen der Pixel-Elektrode (137) und der Gegenelektrode (151) gehalten ist;
ein Speicherkondensator, der zwischen der Pixel-Elektrode (137) und der Speicherkondensatorleitung (143) ausgebildet ist;und
eine Einrichtung zum Liefern einer Speicherkondensatorleitungsspannung an die Speicherkondensatorleitung (143),
dadurch gekennzeichnet, daB die Liefereinrichtung einen Generatorkreis zur Generierung der Speicherkondensatorleitungsspannung, deren Potentialwert sich im wesentlichen synchronisiert mit dem Abtastpuls ändert, und wobei eine Richtung der Potentialwertänderung der Speicherkondensatorleitungsspannung entgegengesetzt ist zu einer Richtung der Potentialwertänderung des Abtastpulses, um eine Änderung einer Flüssigkristallspannung (V1) zu kompensieren, die zwischen der Pixel-Elektrode und der Gegenelektrode erzeugt wird und im wesentlichen mit dem Abtastpuls synchronisiert ist, enthält.

20. Flüssigkristallanzeigegerät nach Anspruch 19, weiter enthaltend eine Gegenelektrodensteuereinrichtung zum Liefern einer Gleichstromspannung an die Gegenelektrode, wobei die Gegenelektrodensteuereinrichtung mit der Gegenelektrode verbunden ist.

21. Flüssigkristallanzeigegerät nach Anspruch 20, wobei eine Änderung der Speicherkondensatorleitungsspannung, die im wesentlichen mit dem Abtastpuls synchronisiert ist, in dem Bereich von |(-CGS·dVY)/Cs|/2 bis |(-CGS·dVY)/Cs|x2,
wobei CGS eine zu einer Gate-Elektrode und einer Source-Elektrode des Transistorschaltelements (127) zugeordneten Störkapazität ist, dVY eine Amplitude des Abtastpulses und Cs eine Kapazität des Speicherkondensators ist.

22. Flüssigkristallanzeigegerät nach Anspruch 21, wobei die Potentialänderung der Speicherkondensatorleitungsspannung |(-CGS·dVY)/Cs| ist.

23. Flüssigkristallanzeigegerät nach Anspruch 19, weiter enthaltend eine Gegenelektrodensteuereinrichtung zum Anlegen einer Gegenelektrodenspannung, die eine Gegenelektrodenspannungspolarität besitzt, die bezüglich eines zweiten Standardpotentials umgekehrt ist, während sie im wesentlichen mit der Bildsignalspannung synchronisiert ist, an die Gegenelektrode.

24. Flüssigkristallanzeigegerät nach Anspruch 23, wobei eine Änderung der Speicherkondensatorleitungsspannung, die im wesentlichen mit dem Abtastpuls synchronisiert ist, in dem Bereich von |(-CGS·dVY)/Cs|/2 bis |(-CGS·dVY)/Cs|x2 ist,
wobei CGS eine Störkapazität zwischen einer Gate-Elektrode und einer Source-Elektrode des Transistorschaltelements ist, dVY eine Amplitude des Abtastpulses und Cs eine Kapazität des Speicherkondensators ist.

25. Flüssigkristallanzeigegerät nach Anspruch 24, wobei die Änderung der Speicherkondensatorleitungsspannung |(-CGS·dVY)/Cs| ist.

## Revendications

1. Dispositif de visualisation à cristal liquide comprenant:
une interconnexion matricielle ayant un ensemble de lignes de balayage (125) et un ensemble de lignes de signal (123) disposées de façon à rencontrer l'ensemble de lignes de balayage, dans laquelle une impulsion de balayage est appliquée aux lignes de balayage (125), et une tension de signal d'image ayant une polarité qui est périodiquement inversée par rapport à un premier potentiel standard, est appliquée aux lignes de signal (123);
une électrode de pixel (137) disposée à chaque intersection de l'ensemble de lignes de balayage (125) et de l'ensemble de lignes de signal (123);
un élément de commutation à transistor (127) placé à chaque intersection de l'ensemble de lignes de balayage (125) et de l'ensemble de lignes de signal (123), et connecté à chaque électrode de pixel (137);
un condensateur de stockage formé entre l'électrode de pixel (136) et une ligne de condensateurs de stockage (143);
une contre-électrode (151) disposée face à l'électrode de pixel (137);
une composition de cristal liquide (115), maintenue entre l'électrode de pixel (137) et la contre-électrode (151); et
des moyens pour appliquer une tension de ligne de condensateurs de stockage à la ligne de condensateurs de stockage (143);
caractérisé en ce que les moyens d'application de tension comprennent un circuit de génération qui génère la tension de ligne de condensateurs de stockage, dont la polarité est inversée par rapport à un second potentiel standard, pratiquement en synchronisme avec l'inversion de polarité de la tension de signal d'image, et la tension de ligne de condensateurs de stockage est appliquée à la ligne de condensateurs de stockage (143) de façon à compenser un premier changement d'une tension de cristal liquide qui est générée entre l'électrode de pixel (137) et la contre-électrode (151), pratiquement en synchronisme avec l'inversion de polarité de la tension de signal d'image.

2. Dispositif de visualisation à cristal liquide de la revendication 1, comprenant en outre des moyens d'attaque de contre-électrode pour appliquer une tension continue à la contre-électrode.

3. Dispositif de visualisation à cristal liquide de la revendication 2, dans lequel une amplitude de la tension de ligne de condensateurs de stockage, pratiquement synchronisée avec la tension de signal d'image, est dans la plage de |(-CDS·dVX/Cs)|/5 à [(-CDS·dVX/Cs)|×10,
avec les notations suivantes: CDS est une capacité parasite associée à une électrode de drain (135) de l'élément de commutation à transistor (127) et une électrode de source (139) de l'élément de commutation à transistor (127), dVX est une amplitude de la tension de signal d'image, et Cs est une capacité du condensateur de stockage.

4. Dispositif de visualisation à cristal liquide de la revendication 3, dans lequel l'amplitude de la tension de ligne de condensateurs de stockage, pratiquement synchronisée avec la tension de signal d'image, est |(-CDS·dVX/Cs)|.

5. Dispositif de visualisation à cristal liquide de la revendication 1, dans lequel la contre-électrode (151) est connectée à des moyens d'attaque en tension de contre-électrode, pour fournir une tension de contre-électrode ayant une polarité de tension de contre-électrode qui est inversée par rapport à un troisième potentiel standard, en étant synchronisée avec la tension de signal d'image, et ayant une polarité inversée par rapport au troisième potentiel standard dont la polarité est la même que celle de la tension de ligne de condensateurs de stockage, inversée par rapport au second potentiel standard.

6. Dispositif de visualisation à cristal liquide de la revendication 5, dans lequel l'amplitude de la tension de ligne de condensateurs de stockage est supérieure à celle de la tension de contre-électrode pratiquement synchronisée avec la tension de signal d'image.

7. Dispositif de visualisation à cristal liquide de la revendication 5, dans lequel l'amplitude de la tension de ligne de condensateurs de stockage pratiquement synchronisée avec la tension de signal d'image est dans la plage de |[(CGS+CDS+Cs)·dVc-CDS·dVX]/Cs|/5 à ([(CGS+CDS+Cs)·dVc-CDS·dVX]/Cs|×10,
avec les notations suivantes: CGS est une capacité parasite associée à une électrode de grille et une électrode de source de l'élément de commutation à transistor (127), CDS est une capacité parasite associée à une électrode de drain et une électrode de source de l'élément de commutation à transistor (127), dVc est une amplitude de la tension de contre-électrode qui est appliquée à la contre-électrode (151), dVX est une amplitude de la tension de signal d'image, et Cs est une capacité du condensateur de stockage.

8. Dispositif de visualisation à cristal liquide de la revendication 7, dans lequel l'amplitude de la tension de ligne de condensateurs de stockage est |[(CGS+CDS+Cs)·dVc-CDS·dVX]/Cs|.

9. Dispositif de visualisation à cristal liquide de la revendication 2, dans lequel la tension de ligne de condensateurs de stockage, dont le potentiel change pratiquement en synchronisme avec l'impulsion de balayage, de façon à compenser un second changement de la tension appliquée au cristal liquide, pratiquement synchronisé avec l'impulsion de balayage, est appliquée à la ligne de condensateurs de stockage.

10. Dispositif de visualisation à cristal liquide de la revendication 9, dans lequel un changement de la tension de ligne de condensateurs de stockage, pratiquement synchronisé avec l'impulsion de balayage, est dans la plage de |(-CGS·dVY)/Cs|/2 à |(-CGS.dVY)/Cs|×2,
avec les notations suivantes: CGS est la capacité parasite entre une électrode de grille et une électrode de source de l'élément de commutation à transistor (127), dVY est une amplitude de l'impulsion de balayage et Cs est une capacité du condensateur de stockage.

11. Dispositif de visualisation à cristal liquide de la revendication 10, dans lequel le changement de la tension de ligne de condensateurs de stockage, pratiquement synchronisé avec l'impulsion de balayage, est égal à |(-CGS·dVY)/Cs|.

12. Dispositif de visualisation à cristal liquide de la revendication 9, dans lequel un changement de la tension de ligne de condensateurs de stockage, pratiquement synchronisé avec la tension de signal d'image, est dans la plage de |-CDS·[VX(TF1)-VX(TF2)]/Cs|/5 à |-CDS·[VX(TF1)-VX(TF2)]/Cs|×5,
avec les notations suivantes: CDS est une capacité parasite associée à une électrode de drain et une électrode de source de l'élément de commutation à transistor (127), VX(TF1) est une tension de signal d'image pour une période (TF1), VX(TF2) est une tension de signal d'image pour une période suivante (TF2) et Cs est une capacité du condensateur de stockage.

13. Dispositif de visualisation à cristal liquide de la revendication 12, dans lequel le changement de potentiel de la tension de ligne de condensateurs de stockage, pratiquement synchronisé avec la tension de signal d'image, est égal à |-CDS[VX(TF1)-VX(TF2)]/Cs|.

14. Dispositif de visualisation à cristal liquide de la revendication 5, dans lequel le potentiel change pratiquement en synchronisme avec l'impulsion de balayage, de façon à compenser un second changement de la tension appliquée au cristal liquide, pratiquement synchronisé avec l'impulsion de balayage, est appliquée à la ligne de condensateurs de stockage.

15. Dispositif de visualisation à cristal liquide de la revendication 14, dans lequel un changement de la tension de ligne de condensateurs de stockage, pratiquement synchronisé avec l'impulsion de balayage, est dans la plage de |(-CGS·dVY)/Cs|/2 à |(-CGS·dVY)/Cs|×2, avec les notations suivantes: CGS est une capacité parasite associée à une électrode de grille et une électrode de source de l'élément de commutation à transistor (127), dVY est une amplitude de l'impulsion de balayage et Cs est une capacité du condensateur de stockage.

16. Dispositif de visualisation à cristal liquide de la revendication 15, dans lequel le changement de la tension de ligne de condensateurs de stockage, pratiquement synchronisé avec l'impulsion de balayage, est égal à |(-CGS·dVY)/Cs|.

17. Dispositif de visualisation à cristal liquide de la revendication 14, dans lequel un changement de la tension de ligne de condensateurs de stockage, pratiquement synchronisé avec l'inversion de polarité de la tension de signal d'image, est dans la plage de |{(CGS+CDS+Cs)·[Vc(TF1)-Vc(TF2)]-CDS·[VX(TF1)-VX(TF2)]}/Cs|/5 à |{(CGS+CDS+Cs)[Vc(TF1)-Vc(TF2)]-CDS·[VX(TF1)-VX(TF2)]}/Cs|×10,
avec les notations suivantes: CGS est une capacité parasite associée à une électrode de grille et une électrode de source de l'élément de commutation à transistor (127), CDS est une capacité parasite associée à une électrode de drain et une électrode de source de l'élément de commutation à transistor (127), Cs est une capacité du condensateur de stockage, VC(TF1) est une tension de contre-électrode pour une période (TF1), VC(TF2) est une tension de contre-électrode pour une période suivante (TF2), VX(TF1) est une tension de signal d'image pour une période (TF1), et VX(TF2) est un signal d'image pour une période suivante (TF2).

18. Dispositif de visualisation à cristal liquide de la revendication 17, dans lequel le changement de la tension de ligne de condensateurs de stockage, pratiquement synchronisé avec l'inversion de polarité de la tension de signal d'image, est égal à |(CGS+CDS+Cs)·[Vc(TF1)-Vc(TF2)]-CDS·[VX(TF1)-VX(TF2)]}/Cs|.

19. Dispositif de visualisation à cristal liquide comprenant:
une interconnexion matricielle ayant un ensemble de lignes de balayage (125) et un ensemble de lignes de signal (123), disposées de façon à rencontrer l'ensemble de lignes de balayage (125), dans laquelle une impulsion de balayage est appliquée aux lignes de balayage (125), et une tension de signal d'image, ayant une polarité qui est périodiquement inversée par rapport à un premier potentiel standard, est appliquée aux lignes de signal (123);
une électrode de pixel (137) disposée à chaque intersection de l'ensemble de lignes de balayage (125) et de l'ensemble de lignes de signal (123);
un élément de commutation à transistor (127) placé à chaque intersection de l'ensemble de lignes de balayage (125) et de l'ensemble de lignes de signal (123), et connecté à chaque électrode de pixel (137);
une contre-électrode (151) disposée face à l'électrode de pixel (137);
une composition de cristal liquide (115), maintenue entre l'électrode de pixel (137) et la contre-électrode (151);
un condensateur de stockage formé entre l'électrode de pixel (137) et une ligne de condensateurs de stockage (143); et
des moyens pour appliquer une tension de ligne de condensateurs de stockage à la ligne de condensateurs de stockage (143);
caractérisé en ce que les moyens d'application de tension comprennent un circuit de génération qui génère la tension de ligne de condensateurs de stockage, dont un niveau de potentiel est changé pratiquement en synchronisme avec l'impulsion de balayage, et une direction du changement de niveau de potentiel de la tension de ligne de condensateurs de stockage est opposée à une direction d'un changement de niveau de potentiel de l'impulsion de balayage, de façon à compenser un changement de la tension de cristal liquide (V1) qui est générée entre l'électrode de pixel et la contre-électrode, pratiquement synchronisé avec l'impulsion de balayage.

20. Dispositif de visualisation à cristal liquide de la revendication, comprenant en outre des moyens d'attaque de contre-électrode pour appliquer une tension continue à la contre-électrode, les moyens d'attaque de contre-électrode étant connectés à la contre-électrode.

21. Dispositif de visualisation à cristal liquide de la revendication 20, dans lequel un changement de la tension de ligne de condensateurs de stockage, pratiquement synchronisé avec l'impulsion de balayage, est dans la plage de |(-CGS·dVY)/Cs|/2 à |(-CGS·dVY)/Cs|×2,
avec les notations suivantes: CGS est la capacité parasite associée à une électrode de grille et une électrode de source de l'élément de commutation à transistor (127), dVY est une amplitude de l'impulsion de balayage et Cs est une capacité du condensateur de stockage.

22. Dispositif de visualisation à cristal liquide de la revendication 21, dans lequel le changement de potentiel de la tension de ligne de condensateurs de stockage est égal à |(-CGS·dVY)/Cs|.

23. Dispositif de visualisation à cristal liquide de la revendication 19, comprenant en outre des moyens d'attaque de contre-électrode pour appliquer à la contre-électrode une tension de contre-électrode, ayant une polarité de tension de contre-électrode qui est inversée par rapport à un second potentiel standard, pratiquement en synchronisme avec la tension de signal d'image.

24. Dispositif de visualisation à cristal liquide de la revendication 23, dans lequel un changement de tension de ligne de condensateurs de stockage, pratiquement synchronisé avec l'impulsion de balayage, est dans la plage de |(-CGS·dVY)/Cs|/2 à |(-CGS·dVY)/Cs|×2,
avec les notations suivantes: CGS est une capacité parasite entre une électrode de grille et une électrode de source de l'élément de commutation à transistor, dVY est une amplitude de l'impulsion de balayage et Cs est une capacité du condensateur de stockage.

25. Dispositif de visualisation à cristal liquide de la revendication 24, dans lequel le changement de la tension de ligne de condensateurs de stockage est égal à |(-CGS·dVY)/Cs|.
